# FASCICULE DE BREVET EUROPEEN

(11) **EP 0 681 164 B1**
(45) Date de publication et mention de la délivrance du brevet: **31.01.2001**
(21) Numéro de dépôt: 94107109.4
(22) Date de dépôt: 06.05.1994
(51) Int. Cl.: G01F 11/34

(54) **Système de dosage de produit en poudre**
System zum Dosieren von pulverförmigen Stoffen
Dosing system for powdered material

(43) Date de publication de la demande: 08.11.1995
(73) Titulaire: SOCIETE DES PRODUITS NESTLE S.A., 1800 Vevey (CH)
(72) Inventeur: Masek, Petr, 1614 Granges (CH); Jean-François Tinembart, 1400 Yverdon (CH)
(74) Mandataire: Thomas, Alain

(56) Documents cités:
- CH-A- 244 003
- DE-A- 3 913 401
- FR-A- 815 715
- FR-A- 1 405 580
- GB-A- 308 954
- US-A- 1 988 865

## Description

L'invention concerne un système de dosage de produit en poudre, en particulier pour des poudres hydrosolubles.

On connaît déjà des systèmes de délivrance de produits sous forme granulaire, comme par exemple le dispositif objet du brevet US 4'724'984. Ce système présente cependant divers inconvénients, en particulier celui de donner une solution de distribution de produit dans laquelle il n'y a pas à proprement parler de fermeture complète du système, de sorte qu'on en peut pas garantir d'une part une hygiène complète et d'autre part l'absence totale de dépôt sur les parois de morceaux n'ayant pas été délivrés.

Le brevet DE 39 13 401 concerne également un système de dosage de produit de fourrage qui est délivré dans des mangeoires pour animaux. Ce dispositif ne comporte pas de corps pour la réception du produit avec une forme qui se rétrécit, mais un tube de même diamètre sur toute la longueur. D'autre part, le système de dosage est un simple tiroir en forme de bouchon, de même diamètre sur toute sa hauteur et le système de levier est solidaire du tiroir et ne forme pas une partie en soi. L'inconvénient de ce système est qu'il est prévu pour des gros dosages de produit et non des dosages fins et il ne garantit pas l'absence totale de dépôt sur les parois extérieures.

Le dispositif, objet de la présente invention, permet de garantir un dosage régulier, ce qui conduit à une qualité optimale de la boisson préparée. Le but de la présente invention est en outre de mettre au point un système de dosage avec lequel on peut garantir une bonne hygiène de la distribution et on peut éviter toute dégradation du produit grâce à une fermeture complète du système évitant ainsi toute dégradation, par exemple dans un climat avec une forte humidité relative. Ce problème est particulièrement critique pour tous les produits solubles dans l'eau, comme le café soluble. Il faut ainsi pouvoir disposer d'un système de dosage bien étanche garantissant une parfaite protection du produit à distribuer contre la vapeur d'eau et sa bonne qualité pendant une longue période.

L'invention concerne un système de dosage de produit en poudre comprenant
- un corps pour la réception du produit à doser, ledit corps comportant une trémie dans sa partie supérieure se prolongeant vers le bas par deux chambres de dosage et un goulot d'écoulement de dimension plus réduite par rapport à la trémie, les chambres de dosage définissant une partie élargie par rapport au goulot d'écoulement,
- un tiroir de dosage prévu pour coulisser entre une position de fermeture et d'ouverture dans ledit goulot d'écoulement et comportant au niveau de la trémie un logement pour coopérer avec un système de commande, une partie de liaison reliant ledit logement à un obturateur l'obturateur ayant une section correspondant sensiblement à celle du goulot d'écoulement et un bouchon de fermeture de section plus faible que celle de l'obturateur, dans la position d'ouverture du tiroir de dosage, l'obturateur obstruant le passage entre la trémie et les chambres de dosage, libère le produit desdites chambres et ouvre le goulot d'écoulement et dans la position de fermeture du tiroir de dosage, celui-ci libérant le passage entre la trémie et les chambres de dosage et ferme de façon étanche le goulot d'écoulement, de manière à ce que le produit remplisse à nouveau les chambres de dosage, et
- un système de commande disposé au niveau de la trémie du corps de réception et comportant un levier extérieur et un levier intérieur, montés à rotation autour du même axe, le levier intérieur coopérant avec le logement du tiroir de dosage.

Le goulot d'écoulement peut être de forme carrée, rectangulaire ou ronde. Le corps pour la réception du produit peut être en deux parties, de manière à permettre le montage, démontage et nettoyage.

Dans ce système il suffit de remplir le corps pour la réception du produit à doser dudit produit à distribuer et de manipuler ensuite à la main le système de commande en agissant sur le levier extérieur de manière à ce que le tiroir de dosage ouvre la chambre de dosage, délivrant ainsi dans une tasse ou un gobelet, disposé directement en dessous de la bouche de sortie du goulot d'écoulement, la dose de produit en poudre. Il reste ensuite à ajouter sur ladite poudre la quantité convenable d'eau chaude ou froide.

Comme déjà mentionné précédemment, il est important que le produit en poudre soit bien isolé de l'atmosphère ambiante : c'est la raison pour laquelle le corps pour la réception du produit à doser comprend un couvercle pour fermer de manière étanche le haut dudit corps.
Le système de dosage selon l'invention permet de doser tout type de produit en poudre hydrosoluble, en particulier le café soluble, le sucre et le thé soluble. Le système trouve une application très intéressante dans toute partie du globe présentant un climat à forte humidité relative :il permet d'éviter toute humidification intempestive de la poudre.

La seule zone où le système est en contact avec l'atmosphère ambiant est la bouche de sortie du goulot d'écoulement : cette sortie est fermée par le bouchon de fermeture. C'est à ce seul endroit qu'on pourrait avoir un blocage du système. Ce problème est résolu par une géométrie spécifique du levier intérieur permettant de multiplier la force d'arrachement par 8 lors de l'amorçage du mouvement de translation verticale du tiroir de dosage, au cas ou il y aurait effectivement collage du bouchon de fermeture sur le pourtour de la bouche de sortie du goulot.

Il est préférable dans le dispositif selon l'invention de prévoir deux chambres de dosage, disposées symétriquement par rapport au plan de symétrie du goulot d'écoulement. On dispose de préférence de chambres de dosage de volume variable, par exemple pour varier le dosage entre un volume sensiblement compris entre 4 et 20 ml, ce qui correspond à un poids compris entre 1,5 et 4,5 g.

Il est bien entendu que lorsque le tiroir de dosage est déplacé pour ouvrir la ou les chambres de dosage, pour que le produit puisse s'écouler librement, il faut que le bouchon de fermeture ait une section plus faible que celle de l'obturateur : on choisit une section du bouchon de fermeture sensiblement moitié de celle de l'obturateur. On envisage préférentiellement un bouchon de fermeture ayant une section circulaire, celle de l'obturateur étant carrée ou rectangulaire. Pour le bouchon de fermeture, on envisage un diamètre compris entre 10 et 40 mm, de préférence de 20 mm.

Pour réaliser un dosage qui tombera bien dans la tasse ou le gobelet, il est prévu à proximité de la bouche de sortie du goulot d'écoulement une butée de centrage . Celle-ci a par exemple la forme de deux tiges verticales parallèles.

On a constaté également, que pour garantir une meilleure précision du dosage, il était préférable de prévoir dans la trémie une paroi, de manière à éviter que toute la masse de produit en poudre appuie sur le tiroir de dosage : cette paroi est disposée pour couvrir le tiroir de dosage.

Lorsque le système est en position fermée, il faut que les chambres de dosage soient directement au dessus de l'obturateur : ce qui correspond à choisir une hauteur du goulot d'écoulement correspondant sensiblement à celle de l'obturateur et du bouchon de fermeture.

On peut envisager le système de dosage selon l'invention soit avec des pieds pour le disposer sur une table ou un comptoir, auquel cas on prévoit une géométrie des pieds telle qu'ils forment en même temps butée de centrage. On peut aussi prévoir le système de dosage fixé au mur.

Si on envisage le dosage de plusieurs types différents de café ou de sucre, de thé et de café, il est possible de regrouper plusieurs systèmes de dosage de manière à former un ensemble de dosage.

Comme déjà mentionné précédemment, le système de commande du tiroir de dosage doit parfois permettre un décollage des deux pièces précitées, à savoir du bouchon de fermeture et du goulot d'écoulement. On prévoit que les leviers intérieurs et extérieurs sont indépendants : le levier extérieur pivote librement autour de son axe de rotation tandis que le levier intérieur est solidaire dudit axe et tourne avec lui. Comme le levier extérieur pivote librement, on le munit d'une goupille de manière à ce que son actionnement permette de lever le levier intérieur.

L'indépendance de ces deux leviers permet de régulariser la chute du produit en poudre. Il est prévu en outre que le levier extérieur coopère avec un cliquet permettant de retarder la descente du tiroir de dosage : cette temporisation permet d'être sûr de la descente complète du produit en poudre.

Le système selon l'invention est fabriqué s'agissant du corps pour la réception du produit à doser et du tiroir de dosage en matière plastique injecté, transparent ou opaque. Le tiroir de dosage peut également être en métal.

La suite de la description est faite en référence aux dessins, sur lesquels
Fig. 1 est une représentation schématique du système de dosage réalisé sur pieds,
Fig. 2 est une représentation schématique du système de dosage fixé au mur,

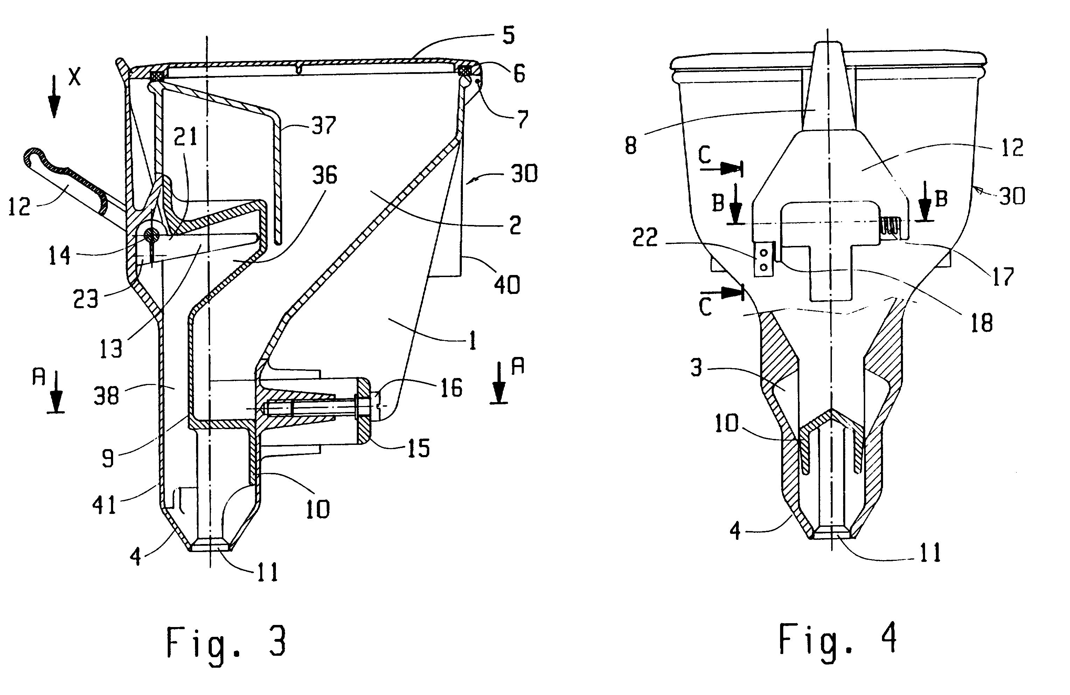

Fig. 3 est une coupe du système selon l'invention,
Fig. 4 est une coupe partielle dans un plan perpendiculaire à celui de la Fig. précédente,

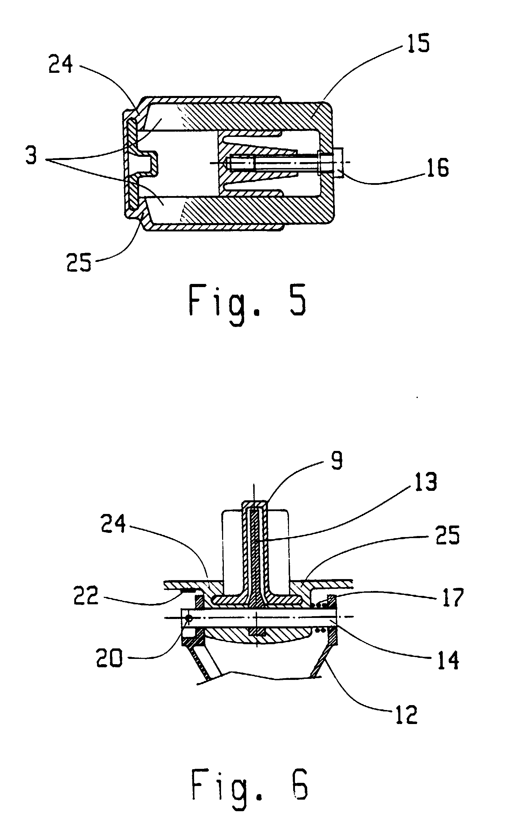

Fig. 5 est une coupe selon la ligne A-A de la Fig. 3,
Fig. 6 est une coupe selon la ligne B-B de la Fig. 4,

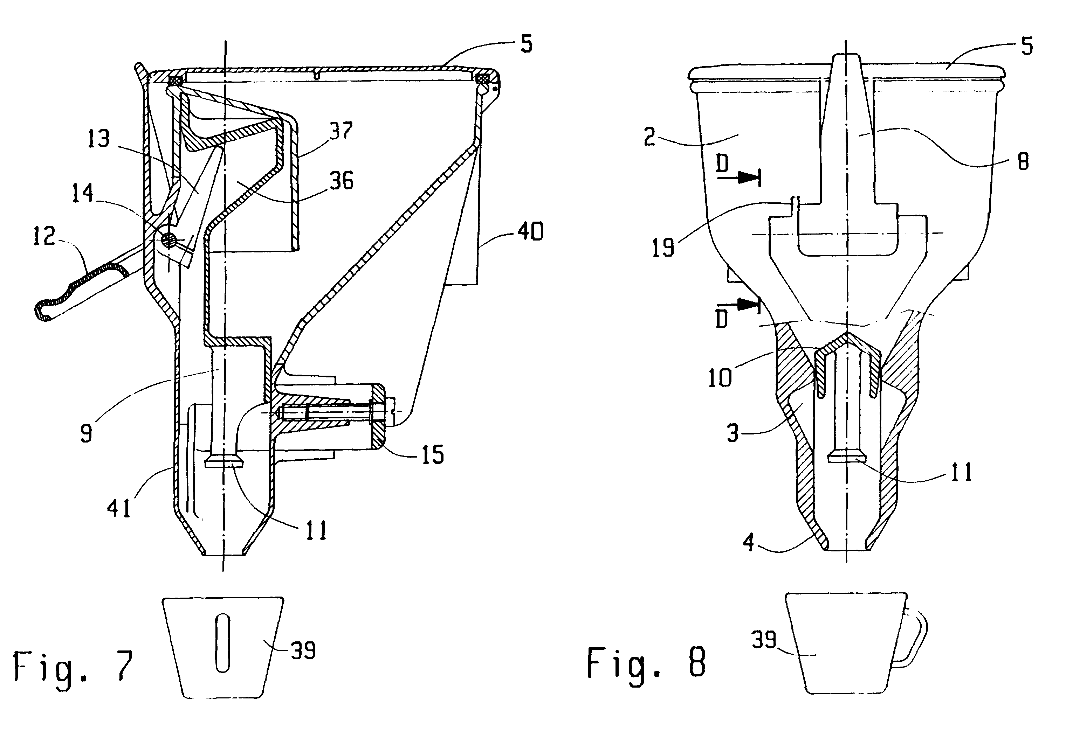

Fig. 7 est une coupe équivalente à celle de la Fig. 3, avec le tiroir de dosage en position ouverte,
Fig. 8 est une coupe partielle équivalente à celle de la Fig. 4, avec le tiroir de dosage en position ouverte,
Fig. 9 est une coupe selon la ligne C-C de la Fig. 4 et
Fig. 10 est une coupe selon la ligne D-D de la Fig. 8.

Le système de dosage (30) est monté sur des pieds (32) et la partie verticale (31) desdits pieds forme une butée de centrage pour le dosage du produit en poudre. Le corps (1) pour la réception du produit à doser comprend une trémie (2) et un goulot d'écoulement (4), ainsi qu'un couvercle (5). Le produit est dosé manuellement grâce au levier extérieur (12).

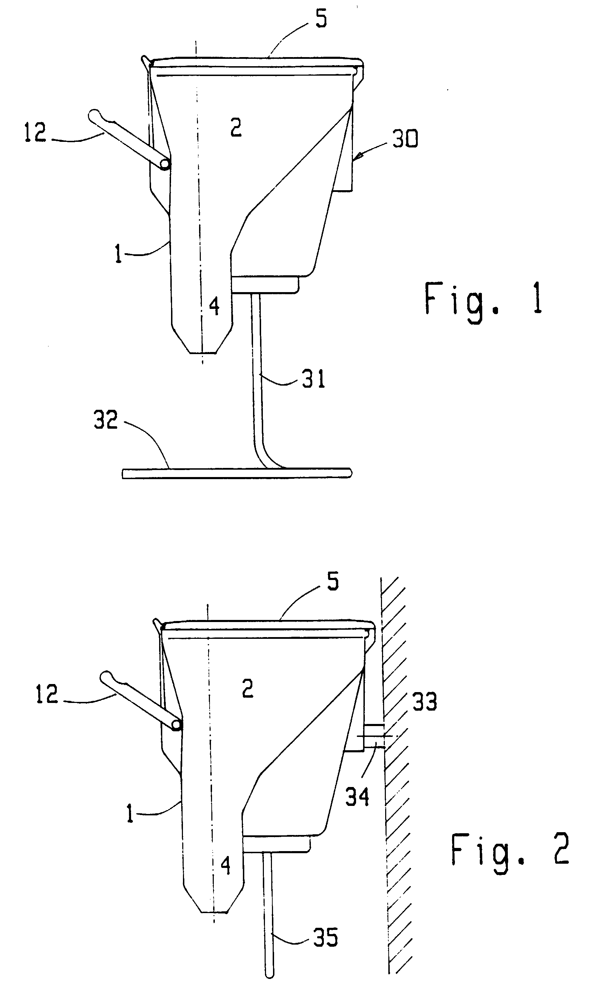

La Fig. 2 représente le même système de dosage que celui de la Fig. 1 , sauf qu'au lieu d'être placé sur une table ou un comptoir, il est accroché au mur (33) grâce à un système d'accrochage (34). On dispose dans ce cas derrière le goulot d'écoulement (4) une butée de centrage (35).

En référence aux figures suivantes, le système de dosage (30) est composé des pièces suivantes :
- un corps (1) avec trémie (2) et paroi (37) dans sa partie supérieure et deux chambres de dosage (3) et un goulot d'écoulement (4) dans sa partie inférieure, ledit corps étant en deux parties (40) et (41),
- un couvercle (5) avec joint d'étanchéité (6) et charnière (7) et maintenu dans sa position fermée par un crochet (8),
- un tiroir de dosage (9) avec un logement (36) pour permettre son ouverture par le système de commande, une partie de liaison (38), un obturateur (10) et un bouchon de fermeture (11),
- un système de commande avec levier extérieur (12) et levier intérieur (13), tous deux montés sur le même axe (14) et
- un tiroir de réglage (15), avec vis de réglage (16) permettant de varier ,si nécessaire, le volume des chambres de dosage (3).

Le goulot d'écoulement (4) est de forme rectangulaire au niveau de l'obturateur (10) et de forme ronde en dessous.

Le fonctionnement du système est le suivant :

On remplit dans un premier temps de produit en poudre le corps (1) et on referme le couvercle (5). On règle le volume de la chambre (3) comme indiqué ci-dessus et on dispose d'un système prêt à l'emploi.

En appuyant sur le levier (12) dans le sens de la flèche X, le levier intérieur (13) tourne dans le logement (36) et entraîne le tiroir de dosage (9) vers le haut :
l'obturateur (10) obstrue le passage entre la trémie (2) et les chambres de dosage (3), libère le produit desdites chambres et ouvre le goulot d'écoulement (4). Le produit tombe dans la tasse (39).

En lâchant le levier (12) dans sa position inférieure ,celui-ci remonte, étant poussé par le ressort de torsion (17). Le tiroir de dosage (9) descend par son propre poids, libère le passage entre la trémie (2) et les chambres de dosage (3) et ferme de façon étanche le goulot d'écoulement (4). Le produit remplit à nouveau les chambres de dosage (3) et on peut répéter l'opération.

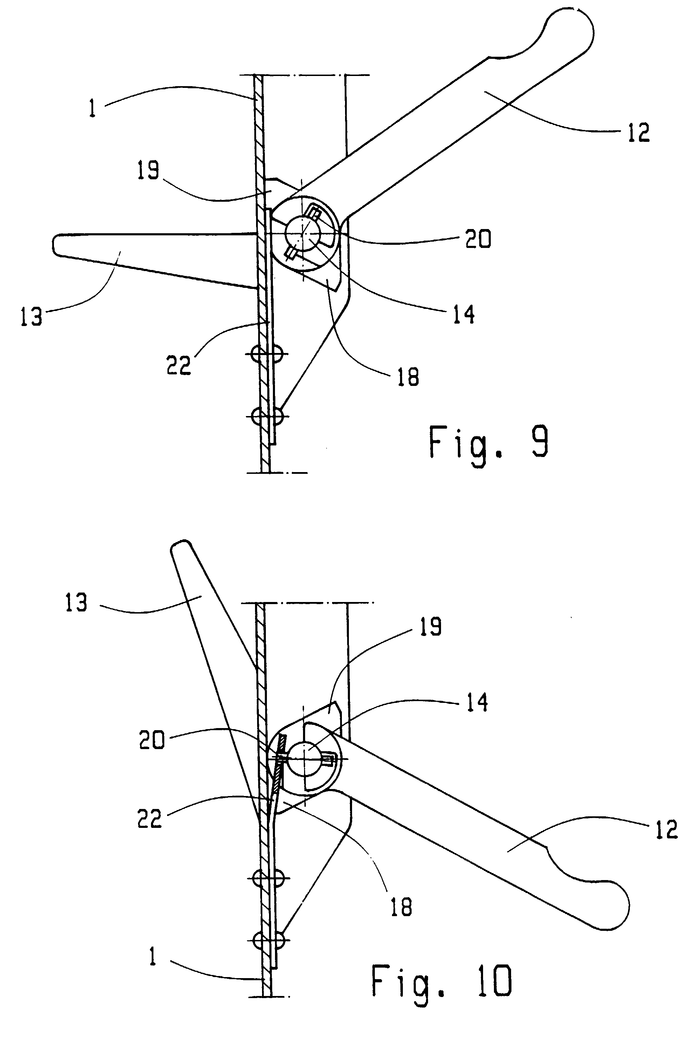

Le fonctionnement du système peut être décrit de manière plus détaillée en référence aux figures 9 et 10 : Le levier extérieur (12) pivote autour de l'axe (14) et son mouvement est limité par les bossages (18) et (19). Il est poussé vers le bas à la main, pour obtenir une dose de produit, comme décrit ci-dessus. Il remonte dans sa position initiale sous l'effet du ressort de torsion (17).

Le levier (13) est solidaire de l'axe (14) et est entraîné par la goupille (20) vers le haut lors du mouvement vers le bas du levier extérieur (12). Le levier intérieur (13) entraîne le tiroir de dosage (9) vers le haut d'abord par un bras court (21) : ceci est nécessaire pour détacher le bouchon de fermeture (11), s'il est collé contre le goulot d'écoulement (4) après l'arrêt prolongé du système de dosage.

Le tiroir de dosage (9), le levier intérieur (13) et l'axe (14) sont retenus dans la position haute par la goupille (20) et le cliquet (22). La goupille (20) est libérée quand le levier extérieur (12) remonte dans sa position initiale et repousse le cliquet (22). Quand la goupille (20) est libérée, le tiroir de dosage (9) descend par son propre poids, entraînant le levier intérieur (13) et l'axe (14).

Le fait de retenir le tiroir de dosage (9) dans la position haute prolonge le temps d'ouverture , permet à tout le produit de tomber dans la tasse (39) et régularise la chute du tiroir de dosage (9) qui ne peut pas être freiné ou retenu par le levier extérieur (12).

Le tiroir de dosage (9), actionné par le levier intérieur (13), est arrêté dans sa position inférieure par le bossage (23). Le tiroir de dosage est guidé par deux guides latéraux (24) et (25), qui sont ouverts en haut, ce qui permet le démontage facile du tiroir de dosage en le tirant vers le haut, quand le couvercle (5) est ouvert.

## Revendications

1. Système de dosage (30) de produit en poudre comprenant
- un corps (1) pour la réception du produit à doser, ledit corps comportant une trémie (2) dans sa partie supérieure se prolongeant vers le bas par deux chambres de dosage (3) et un goulot d'écoulement (4) de dimension plus réduite par rapport à la trémie (2), les chambres de dosage (3) définissant une partie élargie par rapport au goulot d'écoulement (4),
- un tiroir de dosage (9) prévu pour coulisser entre une position de fermeture et d'ouverture dans ledit goulot d'écoulement (4) et comportant au niveau de la trémie un logement (36) pour coopérer avec un système de commande, une partie de liaison (38) reliant ledit logement à un obturateur (10), l'obturateur ayant une section correspondant sensiblement à celle du goulot d'écoulement (4) et un bouchon de fermeture (11) de section plus faible que celle de l'obturateur (10), dans la position d'ouverture du tiroir de dosage (9), l'obturateur (10) obstruant le passage entre la trémie (2) et les chambres de dosage (3), libère le produit desdites chambres et ouvre le goulot d'écoulement (4) et dans la position de fermeture du tiroir de dosage (9), celui-ci libérant le passage entre la trémie (2) et les chambres de dosage (3) et ferme de façon étanche le goulot d'écoulement (4), de manière à ce que le produit remplisse à nouveau les chambres de dosage (3), et
- un système de commande disposé au niveau de la trémie du corps de réception et comportant un levier extérieur (12) et un levier intérieur (13), montés à rotation autour du même axe (14), le levier intérieur (13) coopérant avec le logement (36) du tiroir de dosage (9).

2. Système de dosage selon la revendication 1, caractérisé en ce que la ou les chambres de dosage (3) ont un volume réglable compris entre 4 et 20 ml.

3. Système de dosage selon l'une des revendications 1 ou 2, caractérisé en ce que le produit en poudre à doser est choisi parmi le café soluble, le sucre et le thé soluble.

4. Système de dosage selon l'une des revendications 1 à 3, caractérisé en ce que la section du bouchon de fermeture (11) est sensiblement moitié de celle de l'obturateur (10).

5. Système de dosage selon l'une des revendications 1 à 4, caractérisé en ce qu'il comprend une butée de centrage.

6. Système de dosage selon l'une des revendications 1 à 5, caractérisé en ce que la trémie (2) comprend une paroi (37) de manière à éviter que toute la masse du produit en poudre appuie sur le tiroir de dosage (9).

7. Système de dosage selon l'une quelconque des revendications 1 à 6, caractérisé en ce que la hauteur de l'obturateur (10) et du bouchon de fermeture (11) correspond sensiblement à la hauteur du goulot d'écoulement (4).

8. Système de dosage selon l'une des revendications 1 à 7, caractérisé en ce qu'il est pourvu de pieds ou fixé au mur.

9. Système de dosage selon l'une des revendications 1 à 8, caractérisé en ce qu'on en dispose plusieurs pour le dosage de différents produits en poudre.

10. Système de dosage selon l'une des revendications 1 à 9, caractérisé en ce que le corps (1) pour la réception du produit à doser comprend un couvercle (5) pour fermer de manière étanche le haut dudit corps.

11. Système de dosage selon l'une des revendications 1 à 10, caractérisé en ce que le levier extérieur (12) comprend deux butées (18, 19) coopérant avec une goupille (20) solidaire de l'axe et permettant lors de l'actionnement dudit levier de lever le levier intérieur (13).

12. Système de dosage selon l'une des revendications 1 à 11, caractérisé en ce que le levier extérieur (12) coopère avec un cliquet (22) permettant de retarder la descente du tiroir de dosage (9).

13. Système de dosage selon l'une des revendications 1 à 12, caractérisé en ce que le bouchon de fermeture (11) a une section circulaire.

14. Système de dosage selon l'une des revendications 1 à 13, caractérisé en ce que le corps (1) pour la réception du produit est en deux parties (2,4).

## Claims

1. Dosing system (30) for a powdered product comprising
- a body (1) for receiving the product to be dosed, said body including a hopper (2) in its upper part extending downwards in two dosing chambers (3) and an outflow chute (4) of a smaller size compared with the hopper (2), the dosing chambers (3) defining a part which is wider compared with the outflow chute (4),
- a dosing slide (9) provided so as to slide between a closed and an open position in the said outflow chute (4) and including in the region of the hopper a housing (36) for cooperating with a control system, a connecting part (38) connecting the said housing to a stopper (10), the stopper having a cross section corresponding substantially to that of the outflow chute (4) and a closing plug (11) with a cross section smaller than that of the stopper (10), the stopper (10), in the open position of the dosing slide (9), obstructing the passage between the hopper (2) and the dosing chambers (3), freeing the product from the said chambers and opening the outflow chute (4), and in the closed position of the slide (9), the stopper freeing the passage between the hopper (2) and the dosing chambers (3) and closing the outflow chute (4) in an airtight manner, so that the product once more fills the dosing chambers (3), and
- a control system positioned in the region of the hopper of the receiving body and including an outer lever (12) and an inner lever (13), mounted in rotation about the same axle (14), the inner lever (13) cooperating with the housing (36) of the dosing slide (9).

2. Dosing system according to claim 1, characterized in that the dosing chamber or chambers (3) have a volume which can be regulated between 4 and 20 ml.

3. Dosing system according to either of claims 1 or 2, characterized in that the powdered product to be dosed is chosen from soluble coffee, sugar and soluble tea.

4. Dosing system according to one of claims 1 to 3, characterized in that the cross section of the closing plug (11) is substantially half of that of the stopper (10) .

5. Dosing system according to one of claims 1 to 4, characterized in that it includes a centring stop.

6. Dosing system according to one of claims 1 to 5, characterized in that the hopper (2) includes a wall (37) for preventing any mass of the powdered product from pressing on the dosing slide (9).

7. Dosing system according to any one of claims 1 to 6, characterized in that the height of the stopper (10) and of the closing plug (11) corresponds substantially to the height of the outflow chute (4).

8. Dosing system according to one of claims 1 to 7, characterized in that it is provided with feet or fixed to the wall.

9. Dosing system according to one of claims 1 to 8, characterized in that several of these are provided for dosing different powdered products.

10. Dosing system according to one of claims 1 to 9, characterized in that the body (1) for receiving the product to be dosed includes a lid (5) for closing the top of the said body in an airtight manner.

11. Dosing system according to one of claims 1 to 10, characterized in that the outer lever (12) includes two stops (18, 19) cooperating with a pin (20) secured to the axle and permitting the actuation of the said lever for lifting the inner lever (13).

12. Dosing system according to one of claims 1 to 11, characterized in that the outer lever (12) cooperates with a ratchet (22) enabling the descent of the dosing slide (9) to be retarded.

13. Dosing system according to one of claims 1 to 12, characterized in that the closing plug (11) has a circular cross section.

14. Dosing system according to one of claims 1 to 13, characterized in that the body (1) for receiving the product is in two parts (2, 4).

## Patentansprüche

1. System (30) zum Dosieren eines pulverförmigen Produkts, umfassend:
- einen Körper (1) zur Aufnahme des zu dosierenden Produkts, der in seinem oberen Teil einen Trichter (2) aufweist, der nach unten durch zwei Dosierkammern (3) und einen Ablaufstutzen (4) mit kleineren Abmessungen als der Trichter (2) verlängert ist, wobei die Dosierkammern (3) einen bezüglich des Ablaufstutzens (4) ausgeweiteten Teil bilden,
- einen Dosierschieber (9), der dafür ausgelegt ist, sich in dem Ablaufstutzen (4) zwischen einer geschlossenen Stellung und einer geöffneten Stellung zu verschieben, und folgendes besitzt: eine auf Höhe des Trichters befindliche Aufnahme (36) zum Zusammenwirken mit einem Betätigungssystem, ein Verbindungsteil (38), das die Aufnahme mit einem Absperrorgan (10) verbindet, dessen Querschnitt im wesentlichen dem des Ablaufstutzens (4) entspricht, und einen Verschlussstopfen (11) mit kleinerem Querschnitt als das Absperrorgan (10), wobei das Absperrorgan (10) in der geöffneten Stellung des Dosierschiebers (9) den Durchgang zwischen dem Trichter (2) und den Dosierkammern (3) verschließt, das Produkt aus diesen Kammern freigibt und den Ablaufstutzen (4) öffnet und in der geschlossenen Stellung des Dosierschiebers (9) den Durchgang zwischen dem Trichter (2) und den Dosierkammern (3) freigibt und den Ablaufstutzen (4) dicht verschließt, so dass das Produkt die Dosierkammern (3) wieder füllt, und
- ein Betätigungssystem, das auf Höhe des Trichters des Aufnahmekörpers angeordnet ist und einen äußeren Hebel (12) und einen inneren Hebel (13) aufweist, die um eine gemeinsame Achse (14) drehbar montiert sind, wobei der innere Hebel (13) mit der Aufnahme (36) des Dosierschiebers (9) zusammenwirkt.

2. Dosiersystem nach Anspruch 1, dadurch gekennzeichnet, dass die Dosierkammer bzw. -kammern (3) ein verstellbares Volumen von 4 bis 20 ml haben.

3. Dosiersystem nach einem der Ansprüche 1 oder 2, dadurch gekennzeichnet, dass das zu dosierende pulverförmige Produkt aus löslichem Kaffee, Zucker und löslichem Tee ausgewählt ist.

4. Dosiersystem nach einem der Ansprüche 1 bis 3, dadurch gekennzeichnet, dass der Querschnitt des Verschlussstopfens (11) im wesentlichen die Hälfte des Querschnitts des Absperrorgans (10) beträgt.

5. Dosiersystem nach einem der Ansprüche 1 bis 4, dadurch gekennzeichnet, dass es einen Zentrieranschlag aufweist.

6. Dosiersystem nach einem der Ansprüche 1 bis 5, dadurch gekennzeichnet, dass der Trichter (2) eine Wand (37) aufweist, so dass vermieden wird, dass die gesamte Masse des pulverförmigen Produkts auf dem Dosierschieber (9) liegen bleibt.

7. Dosiersystem nach einem der Ansprüche 1 bis 6, dadurch gekennzeichnet, dass die Höhe des Absperrorgans (10) und des Verschlussstopfens (11) im wesentlichen der Höhe des Ablaufstutzens (4) entspricht.

8. Dosiersystem nach einem der Ansprüche 1 bis 7, dadurch gekennzeichnet, dass es mit Füßen versehen ist oder an der Wand befestigt ist.

9. Dosiersystem nach einem der Ansprüche 1 bis 8, dadurch gekennzeichnet, dass mehrere Systeme für die Dosierung von verschiedenen pulverförmigen Produkten vorgesehen sind.

10. Dosiersystem nach einem der Ansprüche 1 bis 9, dadurch gekennzeichnet, dass der Körper (1) zur Aufnahme des zu dosierenden Produkts einen Deckel (5) aufweist, um den Körper oben dicht zu verschließen.

11. Dosiersystem nach einem der Ansprüche 1 bis 10, dadurch gekennzeichnet, dass der äußere Hebel (12) zwei Anschläge (18, 19) aufweist, die mit einem mit der Achse fest verbundenen Stift (20) zusammenwirken, der das Anheben des inneren Hebels (13) bei der Betätigung des äußeren Hebels (12) gestattet.

12. Dosiersystem nach einem der Ansprüche 1 bis 11, dadurch gekennzeichnet, dass'der äußere Hebel (12) mit einer Klinke (22) zusammenwirkt, die eine Verzögerung der Abwärtsbewegung des Dosierschiebers (9) gestattet.

13. Dosiersystem nach einem der Ansprüche 1 bis 12, dadurch gekennzeichnet, dass der Verschlussstopfen (11) einen kreisförmigen Querschnitt hat.

14. Dosiersystem nach einem der Ansprüche 1 bis 13, dadurch gekennzeichnet, dass der Körper (1) zur Aufnahme des Produkts aus zwei Teilen (2, 4) besteht.
